# EUROPEAN PATENT APPLICATION

(11) **EP 4 421 034 A1**
(43) Date of publication of application: **28.08.2024**
(21) Application number: 22883456.0
(22) Date of filing: 13.10.2022
(51) Int. Cl.: C01B 33/12, C01B 33/145, C01B 33/149

(54) **SURFACE-TREATED SILICA PARTICLE DISPERSION SOL AND PRODUCTION METHOD THEREFOR**

(30) Priority: 18.10.2021 JP 2021170419
(71) Applicant: Mitsubishi Materials Electronic Chemicals Co., Ltd., Akita-shi Akita 010-8585 (JP)
(72) Inventor: YAMAMOTO Yuta, Akita-shi, Akita 010-8585 (JP)
(74) Representative: Hoffmann Eitle
(86) International application number: PCT/JP2022/038168
(87) International publication number: WO 2023/068152

(57) **Abstract**

This surface-treated silica particle dispersion sol (22) is formed by dispersing a group of colloidal silica particles in a hydrophobic solvent (21), the colloidal silica particles being composed of an average number of 4 to 300 spherical primary particles, as observed with a field emission-type scanning electron microscope, chainly connected to have an average length of 35 nm to 1,800 nm, and the particle surfaces being coated with a silane coupling agent or the like having a functional group such as a vinyl group. The average particle diameter of the spherical primary particles is 6 nm to 20 nm and the average aspect ratio of the spherical primary particles is in the range of 1.0 to 1.3. The content ratio of impurities of K, Na, or NH₃ per colloidal silica particle is 3,500 ppm by mass or less and the content ratio of impurities of alkaline earth metals or aluminum is less than 1 ppm by mass.

## Description

### TECHNICAL FIELD

The present invention relates to a sol, in which surface-treated silica particles in which spherical primary particles are chainly connected are dispersed, and to a method for producing the same. More specifically, the present invention relates to a surface-treated silica particle dispersion sol with which it is possible to form a film having a low refractive index when coated on a base material and which has good storage stability and to a method for producing the same. In addition, the present invention also relates to a film obtained using the surface-treated silica particle dispersion sol.

Priority is claimed on Japanese Patent Application No. 2021-170419, filed October 18, 2021, the content of which is incorporated herein by reference.

### BACKGROUND ART

In the related art, as this type of silica sol, a stable silica sol is disclosed (refer to Patent Document 1 (claim 1 to claim 3, page 4, upper right column, lines 5 to 9)) which has an SiO₂ concentration of 0.5 to 30% by weight and which is formed by dispersing, in a liquid medium, amorphous colloidal silica particles having an elongated shape having extension in only one plane with a uniform thickness in the range of 5 to 40 millimicrons as observed by electron microscopy, in which a ratio D₁/D₂ of a particle diameter (D₁ µm) measured by the dynamic light scattering method and a particle diameter (D₂ µm) measured by the nitrogen gas adsorption method is 5 or more and D₁ is 40 to 500 millimicrons.

Claim 2 of Patent Document 1 discloses a method for producing an alkaline silica sol including the following steps (a), (b), and (c).
(a) A step of adding an aqueous solution containing a water-soluble calcium salt, magnesium salt, or a mixture thereof to a colloidal aqueous solution of activated silicic acid containing 1 to 6% by weight of SiO₂ and having a pH of 2 to 4 and carrying out mixing such that the CaO, MgO, or both are an amount of 1500 to 8500 ppm by weight ratio with respect to the SiO₂ of the activated silicic acid,
(b) A step of adding an alkali metal hydroxide, a water-soluble organic base, or a water-soluble silicate thereof to the aqueous solution obtained in step (a) and carrying out mixing such that the molar ratio of SiO₂/M₂O (where SiO₂ represents the content of the silica portion derived from the activated silicic acid and M represents the alkali metal atoms or molecule of the organic base) is 20 to 200,
(c) A step of heating the mixture obtained in step (b) at 60°C to 150°C for 0.5 to 40 hours.

Claim 3 of Patent Document 1 further discloses a method for producing the stable alkaline aqueous silica sol according to claim 2 in which the colloidal aqueous solution of activated silicic acid used in step (a) is obtained by bringing an aqueous solution of sodium water glass having a SiO₂/Na₂O molar ratio of 1 to 4.5 and a SiO₂ concentration of 1 to 6% by weight into contact with a hydrogen-type cation-exchanged resin, the stable alkaline aqueous silica sol having a SiO₂ concentration of 1 to 6% by weight and a pH of 2 to 4 and not including colloidal silica particles having a size of 3 millimicrons or more.

Patent Document 1 indicates that the invention provides a stable silica sol that exhibits an improved performance by modifying the shape of colloidal silica particles and further provides a method for efficiently producing the improved silica sol.

### CITATION LIST

### [Patent Document]

### [Patent Document 1]

Japanese Unexamined Patent Application, First Publication No. H1-317115

### SUMMARY OF INVENTION

### Technical Problem

In the method for producing a silica sol having an elongated shape disclosed in Patent Document 1, water glass as a raw material is passed through a column filled with an ion-exchanged resin to obtain an activated silicic acid aqueous solution. There is a problem in that this metal ion removal step demands a lot of time and effort and is thus inefficient.

In addition, since an aqueous solution having a water-soluble calcium salt, magnesium salt, or a mixture thereof was added to a colloidal aqueous solution of activated silicic acid, metal atoms of impurities were contained in the solution and, as time elapsed, metal particles of the impurities were eluted from the surface of the silica particles and needle-shaped impurities were precipitated, resulting in poor storage stability. For this reason, there is a problem in that the silica sol obtained by the method of Patent Document 1 is not suitable for use in fields such as semiconductors where there is a concern about the influence of impurities.

On the other hand, there is a demand for high-purity spherical colloidal silica particles to have uniform particle diameters as polishing agents for use in chemical mechanical polishing (CMP); however, in a case where a film is formed using spherical colloidal silica particles, there is a problem in that the particles in the film tend to be closely packed, making it difficult to obtain a film having a low refractive index.

An object of the present invention is to provide a surface-treated silica particle dispersion sol which is able to form a film having a low refractive index when coated on a base material and which has good storage stability. Another object of the present invention is to provide a method for easily producing this surface-treated silica particle dispersion sol, as well as a film having a low refractive index.

### Solution to Problem

The present inventors discovered that colloidal silica particles are chainly connected by preparing pure water at a predetermined ratio with respect to the Si in alkyl silicate and dissolving the alkyl silicate at a predetermined ratio in a mixed solvent of this pure water and an organic solvent to prepare an alkyl silicate solution, then heating a raw material liquid made by adding and mixing an alkaline catalyst in a predetermined ratio to this solution, at a predetermined temperature for a predetermined time, thereby arriving at the present invention.

A first aspect of the present invention is a surface-treated silica particle dispersion sol formed by dispersing a group of colloidal silica particles in a hydrophobic solvent, the colloidal silica particles being composed of an average number of 4 to 300 spherical primary particles, as observed with a field emission-type scanning electron microscope, chainly connected to have an average length of 35 nm to 1,800 nm. The surfaces of the particle are coated with a silane coupling agent having a functional group which is a vinyl group, a methyl group, an epoxy group, a styryl group, or a methacrylic group, or coated with a titanate-based coupling agent or an aluminate-based coupling agent. The average particle diameter of the spherical primary particles is 6 nm to 20 nm, the average aspect ratio of the spherical primary particles is in a range of 1.0 to 1.3, the organic solvent is an alcohol having 1 to 4 carbon atoms or a water-soluble glycol compound having 2 to 4 carbon atoms, the content ratio of each of impurities of K, Na, or NH₃ per colloidal silica particle is 3,500 ppm by mass or less, and the content ratio of each of impurities of an alkaline earth metal or aluminum is less than 1 ppm by mass.

A second aspect of the present invention is a method for producing the surface-treated silica particle dispersion sol of the first aspect, the method including:
(a) a step of obtaining an alkyl silicate solution by mixing an alkyl silicate having an alkyl group having 1 to 2 carbon atoms in a mixed solvent of pure water and an organic solvent that is an alcohol having 1 to 4 carbon atoms or a water-soluble glycol compound having 2 to 4 carbon atoms,
(b) a step of obtaining a raw material liquid by adding and mixing an alkaline catalyst, which is an alkali metal hydroxide, ammonia, or an alkylamine, in the alkyl silicate solution,
(c) a step of obtaining a first precursor sol in which colloidal silica particles are dispersed by heating the raw material liquid at 40°C to 100°C for 24 hours to 100 hours,
(d) a step of obtaining an alcohol-diluted sol by adding and mixing an alcohol having 1 to 4 carbon atoms in the first precursor sol,
(e) a step of obtaining a second precursor sol in which surface-treated silica particles are dispersed by adding and mixing, in the alcohol-diluted sol, a surface treatment agent that is a silane coupling agent having a functional group which is a vinyl group, a methyl group, an epoxy group, a styryl group, or a methacrylic group, or a surface treatment agent that is a titanate-based coupling agent or an aluminate-based coupling agent, in a ratio of 10% by mass to 100% by mass, when the silica particles in the alcohol-diluted sol are set to 100% by mass, and carrying out heating at 40°C to 100°C for 3 hours to 24 hours, and
(f) a step of substituting the solvent by adding and mixing a hydrophobic solvent in the second precursor sol such that a silica concentration in the second precursor sol is set to 1% by mass to 25% by mass, and carrying out heating at 40°C to 80°C for 3 hours to 12 hours.

The pure water is included in the mixed solvent in a ratio of 8 molar concentration to 23 molar concentration with respect to Si in the alkyl silicate, the alkyl silicate is mixed at a ratio of 18% by mass to 44% by mass when the alkyl silicate solution is set to 100% by mass in the step (a), and the alkaline catalyst is mixed at a ratio of 0.02% by mass to 0.40% by mass with respect to silica when converting the alkyl silicate into the silica in the step (b).

A third aspect of the present invention is a method for producing a surface-treated silica particle dispersion sol based on the second aspect, in which spherical primary particles having an average aspect ratio of 1.0 to 1.1 and an average particle diameter of less than 5 nm are formed in an initial heating stage of the step (c) and, when the heating ends, the spherical primary particles in the initial heating stage have an average particle diameter of 6 nm to 20 nm and are linked in a chainlike shape having an average number of 4 to 300 particles to form a group of colloidal silica particles having an average length of 35 nm to 1,800 nm.

A fourth aspect of the present invention is a film obtained using the surface-treated silica particle dispersion sol of the first aspect, in which the film has a refractive index of 1.10 to 1.25. That is, the film of the fourth aspect of the present invention may be obtained by coating the surface-treated silica particle dispersion sol of the first aspect on a base material and then carrying out drying.

### ADVANTAGEOUS EFFECTS OF INVENTION

The surface-treated silica particle dispersion sol of the first aspect of the present invention is formed by dispersing a group of colloidal silica particles in a mixed solvent, the colloidal silica particles being composed of an average number of 4 to 300 spherical primary particles, as observed with a field emission-type scanning electron microscope, chainly connected to have an average length of 35 nm to 1,800 nm, thus, when a film is formed therewith, pores are likely to be formed in the film, resulting in a film having a low refractive index. In addition, since the average particle diameter of the spherical primary particles is 6 nm to 20 nm and the surfaces of the particles are surface-treated with a surface treatment agent, aggregation of the particles is suppressed and the storage stability of the silica particle dispersion sol is good. Since the average aspect ratio of the spherical primary particles is in a range of 1.0 to 1.3, the surface-treated silica particle dispersion sol has a low viscosity and there is little variation in the refractive index of the formed film. In addition, since the content ratio of each of the impurities of K, Na, or NH₃ per colloidal silica particle is 3,500 ppm by mass or less, the spherical primary particles have a chainlike shape. Furthermore, since the content ratio of each of the impurities of alkaline earth metal or aluminum in the surface-treated silica particle dispersion sol is less than 1 ppm by mass, the particles do not become coarse even after time elapses in storage and the surface-treated silica particle dispersion sol has high storage stability.

In the method for producing a surface-treated silica particle dispersion sol of the second aspect of the present invention, first, an alkyl silicate is dissolved in a mixed solvent to obtain an alkyl silicate solution and then an alkaline catalyst is added at a predetermined ratio to the alkyl silicate solution in which the alkyl silicate is a predetermined concentration and heated at a predetermined temperature for a predetermined time. Since the alkyl silicate has a predetermined concentration, heating forms the spherical primary particles into a chainlike shape and the alkyl silicate solution does not undergo gelation. By adding an alkaline catalyst at a predetermined ratio, spherical primary particles are generated and, by heating the raw material liquid at a predetermined temperature for a predetermined time, a first precursor sol is obtained in which the spherical primary particles are enlarged to have an average particle diameter of 6 nm to 20 nm and are linked in a chainlike shape having an average number of 4 to 300 particles to form a group of colloidal silica particles having an average length of 35 nm to 1,800 nm.

Next, a surface treatment agent is added and mixed at a predetermined ratio in an alcohol-diluted sol obtained by adding and mixing alcohol in this first precursor sol and heated at a predetermined temperature for a predetermined time to obtain a second precursor sol in which surface-treated silica particles are dispersed. Finally, the solvent is substituted by adding and mixing a hydrophobic solvent in this second precursor sol and carrying out heating at a predetermined temperature for a predetermined time to produce a surface-treated silica particle dispersion sol in which surface-treated silica particles are dispersed in the hydrophobic solvent. In this surface-treated silica particle dispersion sol, by coating the surfaces of the particles with a surface treatment agent, aggregation of the particles is prevented and gelation is suppressed. This makes it possible to prevent gelation even when the concentration of silica in the sol is increased.

In the method for producing a surface-treated silica particle dispersion sol of the third aspect of the present invention, when the heating ends in step (c), the spherical primary particles are formed and are linked in a chainlike shape having an average number of 4 to 300 particles to form a group of colloidal silica particles having an average length of 35 nm to 1,800 nm.

Since the film of the fourth aspect of the present invention is obtained using the surface-treated silica particle dispersion sol of the first aspect, the particles in the film are unlikely to be closely packed, resulting in a film having a low refractive index of 1.10 to 1.25.

### BRIEF DESCRIPTION OF DRAWINGS

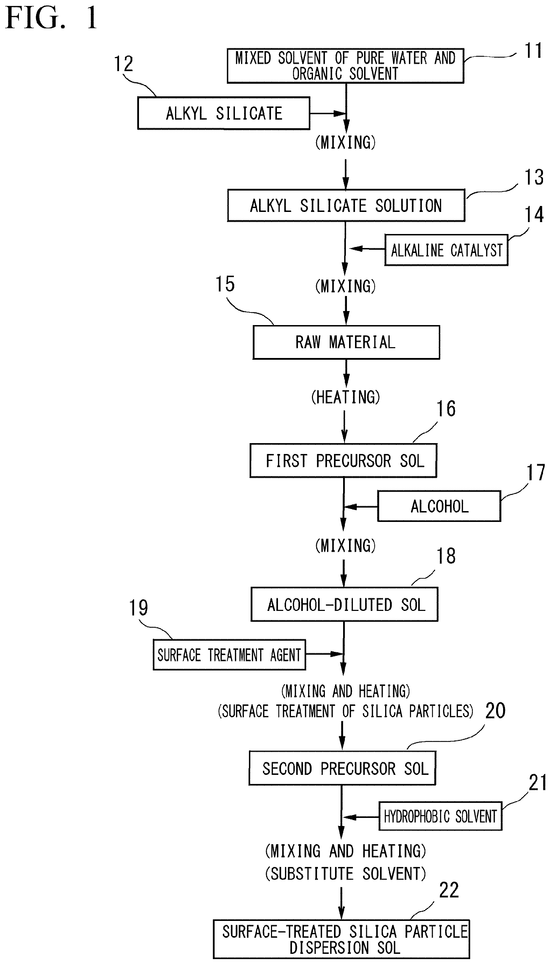

FIG. 1 is a flow diagram for producing a surface-treated silica particle dispersion sol of the present embodiment.

### DESCRIPTION OF EMBODIMENTS

Next, a description will be given of embodiments for carrying out the present invention, with reference to the drawings.

### [Method for Producing Surface-Treated Silica Particle Dispersion Sol]

The surface-treated silica particle dispersion sol of the present embodiment is essentially produced by the following method.

As shown in FIG. 1, an alkyl silicate 12 having an alkyl group having 1 to 2 carbon atoms is added and mixed in a mixed solvent 11 of pure water and an organic solvent to obtain an alkyl silicate solution 13. Next, an alkaline catalyst 14 is added and mixed in this alkyl silicate solution 13 to obtain a raw material liquid 15. Next, this raw material liquid 15 is heated at a predetermined temperature for a predetermined time to obtain a first precursor sol 16 in which colloidal silica particles are dispersed.

Next, a surface treatment agent 19 is added and mixed in an alcohol-diluted sol 18 obtained by adding and mixing an alcohol 17 in this first precursor sol 16 and heated at a predetermined temperature for a predetermined time to obtain a second precursor sol 20 in which surface-treated silica particles are dispersed, then, a hydrophobic solvent 21 is added and mixed in a predetermined ratio in the second precursor sol 20 and the solvent is substituted by heating at a predetermined temperature and time to produce a surface-treated silica particle dispersion sol 22.

### [Preparation of Mixed Solvent of Pure Water and Organic Solvent]

The organic solvent is an alcohol having 1 to 4 carbon atoms or a water-soluble glycol compound having 2 to 4 carbon atoms. Examples of alcohols having 1 to 4 carbon atoms include methanol, ethanol, 2-propanol, n-propanol, and butanol and examples of water-soluble glycol compounds having 2 to 4 carbon atoms include ethylene glycol (2 carbon atoms), propylene glycol (3 carbon atoms), propylene glycol monomethyl ether (PGM) (4 carbon atoms), 1,3-butylene glycol (4 carbon atoms), and the like.

The mixed solvent 11 of pure water and an organic solvent is a mixed solvent of pure water and an alcohol having 1 to 4 carbon atoms, or a mixed solvent of pure water and a water-soluble glycol compound having 2 to 4 carbon atoms. Such a mixed solvent is preferably used since the alkyl silicate is easily dissolved. In addition, the pure water in the mixed solvent is used for hydrolyzing the alkyl silicate and the organic solvent is used for increasing the compatibility between the pure water and the alkyl silicate. The content ratio of the organic solvent in the alkyl silicate solution is preferably 10% by mass to 35% by mass. When the content ratio of the organic solvent is less than the lower limit value, it is difficult for the spherical primary particles to form and it is difficult for the particles to sufficiently form chainly connected particles. In addition, when the upper limit value is exceeded, the spherical primary particles tend to become coarse.

The amount of pure water is adjusted to be 8 molar concentration to 23 molar concentration with respect to the Si (silicon) in the alkyl silicate. When less than the lower limit value, the spherical primary particles become coarse in the heating step. When the upper limit value is exceeded, it is difficult for the spherical primary particles to increase and the spherical primary particles do not sufficiently form a chainlike shape. The amount of pure water is preferably 8 molar concentration to 16 molar concentration and more preferably 9 molar concentration to 15 molar concentration with respect to the Si in the alkyl silicate.

[Preparation of Alkyl Silicate Solution]

The alkyl silicate solution 13 is prepared by adding and mixing the alkyl silicate 12 in the mixed solvent 11. The alkyl silicate 12 is a silicate having an alkyl group having 1 to 2 carbon atoms that is easily hydrolyzed. Examples include tetramethoxysilane (TMOS), tetraethoxysilane (TEOS), mixtures thereof, or oligomers of alkyl silicate. For example, trimers to pentamers of tetramethoxysilane (TMOS) (produced by Mitsubishi Chemical Corp., product name: MKC Silicate MS51, also simply referred to below as "MS51") are preferably used. The alkyl silicate 12 is mixed at a ratio of 18% by mass to 44% by mass when the alkyl silicate solution 13 is set to 100% by mass. When less than the lower limit value, it is difficult for the spherical primary particles to be enlarged in the heating step. In addition, when the upper limit value is exceeded, the number of linked primary particles tends to increase and the chain lengths tend to increase accordingly. In addition, the alkyl silicate solution undergoes gelation. When the alkyl silicate solution 13 is set to 100% by mass, the alkyl silicate 12 is preferably mixed in a ratio of 21% by mass to 43% by mass and more preferably in a ratio of 26% by mass to 38% by mass.

Preferably, the alkyl silicate solution is prepared by stirring for 1 minute to 30 minutes at a temperature of 0°C to 30°C. The content ratio of the alkyl silicate in the alkyl silicate solution is determined by measurement using nuclear magnetic resonance (NMR) (produced by BRUKER, product number: AVANCE III 400).

### [Preparation of Raw Material Liquid]

The raw material liquid 15 is prepared by adding and mixing the alkaline catalyst 14 in the alkyl silicate solution 13 at a ratio of 0.02% by mass to 0.40% by mass with respect to the silica when converting the alkyl silicate into silica. The alkaline catalyst 14 is an alkali metal hydroxide, ammonia, or an alkylamine. With other alkaline earth metal hydroxides or alkaline catalysts including aluminum, in the heating step, the spherical primary particles increase, the particles become coarser and it is difficult to increase the chain length of the primary particles.

By using the alkaline catalyst 14 as described above, the content ratio of impurities of alkaline earth metal or aluminum per final colloidal silica particle is less than 1 ppm by mass. Examples of alkali metal hydroxides include potassium hydroxide (KOH) or sodium hydroxide (NaOH), and examples of alkylamines include methylamine (CH₃NH₂), dimethylamine ((CH₃)₂NH), and trimethylamine ((CH₃)₃N), and the like. The alkaline catalyst promotes the hydrolysis of the alkyl silicate in the alkyl silicate solution 13 in the presence of pure water and an organic solvent. When the addition ratio of the alkaline catalyst is less than the lower limit value of 0.02% by mass, the reactivity is poor, spherical primary particles are not sufficiently generated, and it is difficult for the particles to form a chainlike shape. When the upper limit value of 0.40% by mass is exceeded, in the heating step, hydrolysis is excessively promoted, reactivity becomes excessively high, and spherical particles are generated instead of chainly connected particles. The raw material liquid is preferably prepared by stirring for 1 minute to 30 minutes at a temperature of 0°C to 30°C. The addition ratio of the alkaline catalyst is preferably 0.02% by mass to 0.30% by mass and more preferably 0.05% by mass to 0.25% by mass.

### [Heating of Raw Material Liquid and Production of First Precursor Sol]

The raw material liquid 15 is heated at 40°C to 100°C for 24 hours to 100 hours. Due to this, the spherical primary particles are enlarged to an average particle diameter of 6 nm to 20 nm and form a group of colloidal silica particles having an average number of 4 to 300 particles chainly connected to have an average length of 35 nm to 1,800 nm. A first precursor sol is obtained in which this group of colloidal silica particles is dispersed in the mixed solvent described above. The chain length varies depending on the addition ratio of the alkaline catalyst, the addition ratio of the alkyl silicate, and the heating temperature.

The average particle diameter of the spherical primary particles is the average value of the particle diameters determined by FE-SEM observation (number of observed particles: 50). In addition, the average number of links is the average number of links determined by FE-SEM observation (number of observed particles: 50). Furthermore, the average length of the chainly connected particles is the average value of the lengths determined by FE-SEM observation (number of observed particles: 50). The heating temperature of the raw material liquid 15 is preferably 50°C to 85°C. The heating time for the raw material liquid 15 is preferably 24 hours to 72 hours.

### [Production of Second Precursor Sol having Surface Treated Silica Particles]

As a pretreatment to easily modify the surface of the silica particles dispersed in the first precursor sol, the first precursor sol is diluted with an alcohol having 1 to 4 carbon atoms that easily evaporates during solvent substitution as described below to prepare an alcohol-diluted sol. Examples of alcohols having 1 to 4 carbon atoms include methanol, ethanol, 2-propanol, n-propanol, and butanol. The dilution ratio is, for example, 1.5 times to 5 times (150% by mass to 500% by mass with respect to the silica particles in the first precursor sol).

By adding a surface treatment agent to this alcohol-diluted sol, stirring, mixing, and then holding at 40°C to 100°C for 3 hours to 24 hours, the hydroxy groups on the surfaces of the particles and a coupling agent described below bond to surface-treat the silica particles and prepare a second precursor sol in which the surface-treated silica particles are dispersed. This surface treatment agent is a silane coupling agent having a functional group which is a vinyl group, a methyl group, an epoxy group, a styryl group, or a methacrylic group, or a titanate-based coupling agent or an aluminate-based coupling agent. The surface treatment agent is added and mixed in a ratio of 10% by mass to 100% by mass when the silica particles in the alcohol-diluted sol are set to 100% by mass. The addition ratio of the surface treatment agent is preferably 10% by mass to 80% by mass and more preferably 15% by mass to 70% by mass. The heating temperature of the mixed solution of the alcohol-diluted sol and the surface treatment agent is preferably 50°C to 90°C and more preferably 60°C to 90°C. The heating time for the mixed solution of the alcohol-diluted sol and the surface treatment agent is preferably 3 hours to 18 hours and more preferably 3 hours to 12 hours.

Examples of silane coupling agents having vinyl groups as functional groups include vinyl trimethoxysilane (produced by Shin-Etsu Chemical Co., Ltd., product name: KBM-1003) and vinyl ethoxysilane (produced by the same company, product name: KBE-1003), examples of silane coupling agents having a methyl group as a functional group include methoxysilane (produced by the same company, product name: KBM-13) and methyl triethoxysilane (produced by the same company, product name: KBE-13), examples of silane coupling agents having an epoxy group as a functional group include 2-(3,4-epoxycyclohexyl)ethyl trimethoxysilane (produced by the same company, product name: KBM-303), examples of silane coupling agents having a styryl group as a functional group include p-styryl trimethoxysilane (produced by the same company, product name: KBM-1403), examples of silane coupling agents having a methacrylic group as a functional group include 3-methacryloxypropylmethyldimethoxysilane (produced by the same company, product name: KBM-502), and the like. Other examples of product names include KBM-22, KBM-403, KBM-503, and SZ31 (all produced by Shin-Etsu Chemical Co., Ltd.).

In addition, examples of the titanate-based coupling agent include isopropyl triisostearoyl titanate (produced by Ajinomoto Fine-Techno Co., Inc., product name: Plenact TTS). Other examples of product names include Plenact 55, Plenact 46B, Plenact 338X, Plenact 238S, Plenact 38S, Plenact 138S, Plenact 41B, and Plenact 9SA (all produced by Ajinomoto Fine-Techno Co., Inc.). Furthermore, examples of aluminate coupling agents include alkyl acetoacetate aluminum diisopropylate (for example, produced by Ajinomoto Fine-Techno Co., Inc., product name: Plenact AL-M).

### [Solvent Substitution with Hydrophobic Solvent and Production of Surface-Treated Silica Particle Dispersion Sol]

By adding a hydrophobic solvent to the obtained second precursor sol, stirring, mixing, and then holding at 40°C to 80°C for 3 to 12 hours, the mixed solvent of pure water and organic solvent used at the initial stage of production and the alcohol that diluted the first precursor sol are evaporated to carry out solvent substitution. As a result, a surface-treated silica particle dispersion sol in which surface-treated silica particles are dispersed in a hydrophobic solvent is obtained. Here, the hydrophobic solvent is mixed such that the silica concentration in the second precursor sol is 1% by mass to 25% by mass. The heating temperature of the mixed solution of the second precursor sol and the hydrophobic solvent is preferably 50°C to 80°C and more preferably 50°C to 70°C. The hydrophobic solvent is preferably mixed such that the silica concentration in the second precursor sol is 1% by mass to 20% by mass and more preferably 1% by mass to 10% by mass.

Examples of the hydrophobic solvent include toluene, butyl acetate, cyclohexane, methyl isobutyl ketone, 2-methoxy-1-methylethyl acetate, 1-methoxy-2-propanol, and the like.

The silica (SiO₂) concentration of the surface-treated silica particle dispersion sol of the present embodiment is preferably 10% by mass to 35% by mass. When less than the lower limit value, there is a concern that the film may not have a low refractive index when the film is formed. In addition, when the upper limit value is exceeded, SiO₂ tends to aggregate in the surface-treated silica particle dispersion sol. More preferably, the SiO₂ concentration is 5% by mass to 10% by mass.

### [Characteristics of Surface-Treated Silica Particle Dispersion Sol]

The surface-treated silica particle dispersion sol of the present embodiment is produced by the production method described above and formed by dispersing a group of colloidal silica particles in a hydrophobic solvent, the colloidal silica particles are composed of an average number of 4 to 300 spherical primary particles, as observed by FE-SEM observation, chainly connected to have an average length of 35 nm to 1,800 nm, the average particle diameter of the spherical primary particles is 6 nm to 20 nm, the average aspect ratio of the spherical primary particles is 1.0 to 1.3, the content ratio of each of the impurities of the K, Na, or NH₃ per colloidal silica particle is 3,500 ppm by mass or less, and the content ratio of each of the impurities of the alkaline earth metal or aluminum is less than 1 ppm by mass. The average aspect ratio of the spherical primary particles is the average value of the numerical value of the major axis of the constituent particles divided by the minor axis and is calculated as the average value of the aspect ratios determined individually for 100 or more arbitrary particles. In addition, the concentration of impurities other than NH₃ is determined by measurement using an ICP (high frequency inductively coupled plasma) emission spectrometer/mass spectrometer (manufactured by PerkinElmer Inc., product number: Avio 500). The concentration of NH₃ impurities is determined by measurement using an ammonia meter (manufactured by Toko Kagaku Kenkyujo Co., Ltd., model number: TiN-9001).

When the average number of linked colloidal silica particles is less than 4, the refractive index of the film is high when the film is formed and, when the average number of linked colloidal silica particles exceeds 300, the storage stability of the surface-treated silica particle dispersion sol decreases. The preferable average number of links is 50 to 200. In addition, when the average length of the chainlike shape of the colloidal silica particles is less than 35 nm, the refractive index of the film is not low when the film is formed. In addition, when the above length exceeds 1,800 nm, the storage stability of the surface-treated silica particle dispersion sol decreases and gelation occurs. The preferable average length of the chainlike shape is 50 nm to 1000 nm.

When the average particle diameter of the spherical primary particles is less than 6 nm, it is difficult for the particles to form a chainlike shape and, when the above average particle diameter exceeds 20 nm, it is not possible to form a film, or the refractive index of the film tends to be high even when a film is formed. Preferably, the average particle diameter of the spherical primary particles is 7 nm to 15 nm.

The closer the average aspect ratio of the spherical primary particles is to 1, the lower the viscosity of the surface-treated silica particle dispersion sol and the smaller the variation in the refractive index of the film when the film is formed. When the average aspect ratio of spherical primary particles exceeds 1.3, the thickness of the colloidal silica particle chains becomes non-uniform. The refractive index of the coating film is determined by measurement using a spectroscopic ellipsometer (manufactured by J.A. Woollam Japan, product number: M-2000).

When the content ratio of each of the impurities of K, Na, or NH₃ per colloidal silica particle exceeds 3,500 ppm by mass, the reaction is excessively promoted, the hydrolysis rate is excessively high, and the spherical primary particles do not form a chainlike shape. When the content ratio of each of the impurities of the alkaline earth metal or aluminum per colloidal silica particle is 1 ppm by mass or more, the particles of the surface-treated silica particle dispersion sol becomes coarser and the storage stability decreases as time elapses in storage. The content ratio of each of the impurities of K, Na or NH₃ per colloidal silica particle is preferably 3000 ppm by mass or less and more preferably 2500 ppm by mass or less.

### [Method for Forming Surface-Treated Silica Particle Dispersion Sol on Base Material Surface]

The method of forming the surface-treated silica particle dispersion sol of the present embodiment on the surface of the base material is not particularly limited and, for example, there are methods for coating a surface-treated silica particle dispersion sol on a base material and then carrying out drying at room temperature in a normal atmosphere to form a film. This base material is not particularly limited and examples thereof include glass substrates, silicon wafers, resin substrates, metal foil substrates, and the like. Examples of the method for coating the surface-treated silica particle dispersion sol include a spin coating method, a screen-printing method, a bar coating method, a die coating method, a doctor-blade method, a brush coating method, and the like. The refractive index of the obtained film is 1.10 to 1.25. By using the chain-shaped colloidal silica particle dispersion sol of the present embodiment, the particles in the film are less likely to be closely packed and it is possible to obtain a film having a low refractive index.

### EXAMPLES

Next, a detailed description will be given of Examples of the present invention together with Comparative Examples.

### <Example 1>

A mixed solvent was prepared by mixing 63.5 g of ethanol and 63.5 g of pure water in a flask. The pure water: ethanol mass ratio was 1:1. 73.0 g of tetraethoxysilane (TEOS) was placed in this mixed solvent to prepare a tetraethoxysilane solution. The concentration of tetraethoxysilane in the tetraethoxysilane solution was 34.8% by mass. In addition, pure water was included in a molar concentration ratio of 11.6 with respect to the Si in the tetraethoxysilane. While stirring this solution, 10 g of an aqueous potassium hydroxide (KOH) solution was added dropwise as an alkaline catalyst to prepare a raw material liquid. Potassium hydroxide was added dropwise at a ratio of 0.12% by mass with respect to the silica when converting the tetraethoxysilane into silica. After dropwise-adding the aqueous potassium hydroxide solution, the raw material liquid was heated at 60°C for 96 hours and the raw material liquid was aged. After heating, the raw material liquid was slowly cooled to room temperature to obtain a first precursor sol in which colloidal silica particles were dispersed. The solvent that evaporated or volatilized due to heating was transferred to a cooling system, liquefied, and returned to the raw material liquid.

Next, methanol was added and mixed in the first precursor sol at a ratio of 400% by mass with respect to the silica particles in the first precursor sol to obtain a methanol-diluted sol, then, methyltriethoxysilane (produced by Shin-Etsu Chemical Co., Ltd., product name: KBE-13) as a surface treatment agent was added thereto at a ratio of 50% by mass with respect to the silica particles in the methanol-diluted sol, stirred, mixed, and held at 60°C for 5 hours to obtain a second precursor sol.

Finally, 2-methoxy-1-methylethyl acetate, which is a hydrophobic solvent, was added to the second precursor sol such that the silica concentration in the second precursor sol was 10% by mass and stirred, mixed, and held at 60°C for 3 hours to evaporate the solvent in the second precursor sol up to this point and carry out the hydrophobic solvent substitution. Due to this, a surface-treated silica particle dispersion sol of Example 1 was obtained.

Table 1 and Table 2 below show both the preparation conditions for the alkyl silicate solution and the like and the preparation conditions for the raw material liquid in Example 1 and Examples 2 to 21 and Comparative Examples 1 to 12, which are described below. In Comparative Example 11, as described below, a sodium silicate (Na silicate) aqueous solution was used instead of the alkyl silicate solution.

**TABLE 1**

| | Preparation conditions for alkyl silicate solution and the like. | | | |
|---|---|---|---|---|
| | Alkyl silicate solution and the like | | Pure water | Organic solvent |
| | Type | Ratio (% by mass) | Ratio to Si(molar concentration) | Type |
| Example 1 | TEOS | 34.8 | 11.6 | Ethanol |
| Example 2 | TEOS | 26.1 | 23.0 | Ethanol |
| Example 3 | TEOS | 43.5 | 8.2 | Ethanol |
| Example 4 | TEOS | 34.8 | 9.6 | Propylene glycol monomethyl ether |
| Example 5 | TEOS | 34.8 | 7.6 | Ethanol |
| Example 6 | TEOS | 26.1 | 11.3 | Ethanol |
| Example 7 | TEOS | 34.8 | 11.7 | Ethanol |
| Example 8 | TEOS | 34.8 | 11.7 | Ethanol |
| Example 9 | TEOS | 34.8 | 11.7 | Ethanol |
| Example 10 | TEOS | 34.8 | 11.7 | Ethanol |
| Example 11 | MS51 + TEOS | 34.6 | 11.7 | Ethanol |
| Example 12 | TEOS | 34.8 | 11.6 | Ethanol |
| Example 13 | MS51 | 18.3 | 15.4 | Ethanol |
| Example 14 | TEOS | 34.8 | 11.6 | Methanol |
| Example 15 | TEOS | 34.8 | 11.6 | 2-propanol |
| Example 16 | TEOS | 34.8 | 11.6 | n-propanol |
| Example 17 | TEOS | 34.8 | 11.6 | Ethylene glycol |
| Example 18 | TEOS | 34.8 | 11.6 | Butanol |
| Example 19 | TEOS | 34.8 | 11.6 | Ethanol |
| Example 20 | TEOS | 34.8 | 11.6 | Ethanol |
| Example 21 | TEOS | 34.8 | 11.6 | Methanol |
| Comparative Example 1 | TEOS | 34.8 | 11.7 | Ethanol |
| Comparative Example 2 | TEOS | 34.8 | 11.7 | Ethanol |
| Comparative Example 3 | TEOS | 34.8 | 11.7 | Ethanol |
| Comparative Example 4 | TEOS | 60.8 | 4.2 | Ethanol |
| Comparative Example 5 | TEOS | 8.7 | 64.0 | Ethanol |
| Comparative Example 6 | TEOS | 34.8 | 1.6 | Propylene glycol monomethyl ether |
| Comparative Example 7 | TEOS | 34.8 | 1.6 | Ethanol |
| Comparative Example 8 | TEOS | 34.8 | 11.7 | Ethanol |
| Comparative Example 9 | TEOS | 69.5 | 2.9 | Ethanol |
| Comparative Example 10 | TEOS | 34.8 | 11.7 | Ethanol |
| Comparative Example 11 | Na silicate | 7.2 | 87.7 | Pure water |
| Comparative Example 12 | TEOS | 34.8 | 11.6 | Ethanol |

**TABLE 2**

| | Preparation conditions for raw material liquid | | | Heating conditions | | Surface treatment and substitute solvent conditions |
|---|---|---|---|---|---|---|
| | Alkyl silicate and the like | Alkaline catalyst | | Temperature (°C) | Time (h) | |
| | Type | Type | Ratio (% by mass) | | | |
| Example 1 | TEOS | KOH | 0.12 | 60 | 96 | Condition 1 |
| Example 2 | TEOS | NaOH | 0.12 | 60 | 24 | Condition 2 |
| Example 3 | TEOS | NaOH | 0.12 | 60 | 96 | Condition 3 |
| Example 4 | TEOS | NaOH | 0.12 | 60 | 24 | Condition 4 |
| Example 5 | TEOS | NaOH | 0.12 | 60 | 24 | Condition 5 |
| Example 6 | TEOS | NaOH | 0.12 | 60 | 24 | Condition 6 |
| Example 7 | TEOS | NaOH | 0.12 | 40 | 24 | Condition 7 |
| Example 8 | TEOS | NH₃ | 0.12 | 60 | 48 | Condition 1 |
| Example 9 | TEOS | NaOH | 0.02 | 60 | 24 | Condition 1 |
| Example 10 | TEOS | NH₃ | 0.35 | 60 | 48 | Condition 1 |
| Example 11 | MS51 + TEOS | KOH | 0.12 | 60 | 96 | Condition 1 |
| Example 12 | TEOS | KOH | 0.12 | 100 | 24 | Condition 1 |
| Example 13 | MS51 | KOH | 0.12 | 60 | 24 | Condition 1 |
| Example 14 | TEOS | KOH | 0.12 | 60 | 24 | Condition 1 |
| Example 15 | TEOS | KOH | 0.12 | 60 | 24 | Condition 1 |
| Example 16 | TEOS | KOH | 0.12 | 60 | 24 | Condition 1 |
| Example 17 | TEOS | KOH | 0.12 | 60 | 24 | Condition 1 |
| Example 18 | TEOS | KOH | 0.12 | 60 | 24 | Condition 1 |
| Example 19 | TEOS | CH₃NH₂ | 0.12 | 60 | 48 | Condition 1 |
| Example 20 | TEOS | (CH₃)₂NH | 0.12 | 60 | 48 | Condition 1 |
| Example 21 | TEOS | (CH₃)₃N | 0.12 | 60 | 48 | Condition 1 |
| Comparative Example 1 | TEOS | Mg(OH)₂ | 0.12 | 60 | 24 | - |
| Comparative Example 2 | TEOS | AlCl₃ + NH₃ | 0.12 | 60 | 24 | - |
| Comparative Example 3 | TEOS | NaOH | 0.01 | 60 | 24 | Condition 1 |
| Comparative Example 4 | TEOS | NaOH | 0.12 | 60 | 24 | - |
| Comparative Example 5 | TEOS | NaOH | 0.12 | 60 | 24 | Condition 1 |
| Comparative Example 6 | TEOS | NaOH | 0.12 | 60 | 24 | Condition 1 |
| Comparative Example 7 | TEOS | NaOH | 0.12 | 60 | 24 | Condition 1 |
| Comparative Example 8 | TEOS | NH₃ | 0.60 | 60 | 24 | Condition 1 |
| Comparative Example 9 | TEOS | NaOH | 0.12 | 60 | 24 | - |
| Comparative Example 10 | TEOS | NaOH | 0.70 | 60 | 24 | - |
| Comparative Example 11 | Na silicate | CaCl₂ + NaOH | 1.37 | 130 | 6 | Condition 9 |
| Comparative Example 12 | TEOS | KOH | 0.12 | 60 | 96 | Condition 8 |

### <Examples 2 to 21 and Comparative Examples 1 to 10, 12>

As shown in Table 1, when preparing the alkyl silicate solutions of Examples 2 to 21 and Comparative Examples 1 to 10 and 12, in Example 11, as the alkyl silicate, tetramethoxysilane (TMOS) trimers to pentamers (produced by Mitsubishi Chemical Corporation, product name: MKC Silicate MS51) and tetramethoxysilane (TMOS) were used. The mixing ratio of MS51 and TEOS was 1:1 by mass ratio. In addition, in Example 13, MS51 was used as the alkyl silicate. In Examples other than the above and in Comparative Examples 1 to 10 and 12, the same tetraethoxysilane (TEOS) as in Example 1 was used.

The mixing ratio of the alkyl silicate in the alkyl silicate solutions of Examples 2 to 21 and Comparative Examples 1 to 10 and 12 was the same as that of Example 1 or changed, as shown in Table 1. The molar concentration ratio of pure water with respect to Si in the alkyl silicate in Examples 2 to 21 and Comparative Examples 1 to 10, and 12 was the same as that in Example 1 or changed, as shown in Table 1. The organic solvents in Examples 2 to 21 and Comparative Examples 1 to 10 and 12 were the same as in Example 1 or changed, as shown in Table 1. As the organic solvent, propylene glycol monomethyl ether was used in Example 4 and Comparative Example 6, methanol was used in Examples 14 and 21, 2-propanol was used in Example 15, n-propanol was used in Example 16, ethylene glycol was used in Example 17, and butanol was used in Example 18. In Examples other than the above and Comparative Examples 1 to 5, 7 to 10, and 12, the same ethanol as in Example 1 was used.

As shown in Table 2, when preparing the raw material liquids of Examples 2 to 21 and Comparative Examples 1 to 10 and 12, the type of alkaline catalyst was the same as in Example 1 or changed. All are alkaline aqueous solutions. As the alkaline catalyst, magnesium hydroxide (Mg(OH)₂) was used in Comparative Example 1 and a liquid in which aluminum chloride (AlCl₃) hexahydrate and aqueous ammonia (NH₃) were mixed such that the Al and N were 1:1 in the solution was used in Comparative Example 2. In addition, the addition ratio of the alkaline catalyst with respect to the silica when converting the alkyl silicate to silica was the same as in Example 1 or changed. Furthermore, as shown in Table 2, when heating the raw material liquids of Examples 2 to 21 and Comparative Examples 1 to 10 and 12, the temperature and time were the same as in Example 1 or changed. Under these production conditions, first precursor sols in which colloidal silica particles were dispersed were obtained for each of Examples 2 to 21 and Comparative Examples 1 to 10 and 12.

### <Comparative Example 11>

In Comparative Example 11, a first precursor sol in which colloidal silica particles were dispersed was obtained using a method in accordance with Example 1 of Patent Document 1. Specifically, a colloidal aqueous solution of activated silicic acid was obtained by passing a sodium silicate aqueous solution having a SiO₂ concentration of 3.6% by mass through a column filled with a cation-exchanged resin. 2000 g of this colloidal aqueous solution of activated silicic acid was introduced into a glass container and then, while stirring the aqueous solution, 8.0 g of a 10% by mass calcium chloride aqueous solution was added dropwise to the aqueous solution and mixed. While stirring this mixed liquid, 12.0 g of a 10% by mass aqueous sodium hydroxide solution was further added dropwise after 30 minutes to prepare a raw material liquid. This raw material liquid was placed in a stainless-steel autoclave and heated at 130°C for 6 hours and then the contents were taken out to obtain a first precursor sol.

Table 3 below shows the surface treatment conditions and solvent substitution conditions for the silica particles in the eight types of first precursor sol as conditions 1 to 9. Methanol or ethanol was used as a diluting solvent at a ratio of 400% by mass with respect to all of the silica particles in the first precursor sol. For the surface treatment conditions, the heating temperature and heating time for each of the eight types of conditions 1 to 9 were the same as in Example 1 or changed. In condition 8, N-2-(aminoethyl)-3-aminopropylmethyldimethoxysilane (manufactured by Shin-Etsu Chemical Co., Ltd., product name: KBM-602) having a functional group of an amino group, which is not described in the first aspect of the present invention, was used.

**TABLE 3**

| | Particle surface treatment conditions | | | | | | | Substitute solvent conditions | | |
|---|---|---|---|---|---|---|---|---|---|---|
| | Diluting solvent | | Surface treatment agent | | | Heating temperature (°C) | Heating time (h) | Hydrophobic solvent | Heating temperature (°C) | Heating time (h) |
| | Type | Ratio (% by mass) | Type | Functional group | Ratio (% by mass) | | | Type | | |
| Condition 1 | Methanol | 400 | KBM-13 | Methyl group | 50 | 60 | 5 | 2-methoxy-1-methylethyl acetate | 60 | 3 |
| Condition 2 | Methanol | 400 | KBE-1003 | Vinyl group | 100 | 60 | 5 | 1-methoxy-2-propanol | 60 | 3 |
| Condition 3 | Ethanol | 400 | KBM-303 | Epoxy group | 50 | 100 | 3 | 2-methoxy-1-methylethyl acetate | 60 | 3 |
| Condition 4 | Methanol | 400 | KBM-502 | Methacrylic group | 10 | 60 | 5 | Butyl acetate | 60 | 3 |
| Condition 5 | Ethanol | 400 | KBM-1403 | Styryl group | 50 | 40 | 24 | Toluene | 60 | 3 |
| Condition 6 | Ethanol | 400 | TTS | Stearate group | 50 | 60 | 5 | Cyclohexane | 60 | 3 |
| Condition 7 | Ethanol | 400 | AL-M | Alkyl acetoacetate group | 50 | 40 | 5 | Methyl isobutyl ketone | 60 | 3 |
| Condition 8 | Ethanol | 400 | KBM-602 | Amino group | 50 | 60 | 5 | 2-methoxy-1-methylethyl acetate | 60 | 3 |
| Condition 9 | Methanol | 400 | KBE-13 | Methyl group | 50 | 60 | 5 | 2-methoxy-1-methylethyl acetate | 60 | 3 |

For the solvent in the second precursor sol, in which the silica particles in the first precursor sol obtained in Examples 1 to 21 and Comparative Examples 1 to 12 were surface-treated, the substitution with a hydrophobic solvent was performed by heating at 60°C for 3 hours in all of the conditions 1 to 9 as shown in Table 3. In addition, the hydrophobic solvent was added such that the silica concentration in the second precursor sol was 10% by mass.

### <Evaluation>

### (1) State of Colloidal Silica Particles after Heating Raw Material Liquid

Using the FE-SEM described above, the state of the colloidal silica particles was observed 1 hour after heating the raw material liquids of Examples 1 to 21 and Comparative Examples 1 to 12 (initial heating) and at the end of heating (final). The results are shown in Table 4 below. After 1 hour of heating, the average particle diameter of the primary particles of the colloidal silica particles of Example 1 was 4 nm and the average aspect ratio was 1.0. The colloidal silica particles were not in a chainlike shape at that point. At the end of the heating, after 96 hours of heating, the primary particles of the colloidal silica particles of Example 1 were spherical with an average particle diameter of 10 nm and an average aspect ratio of 1.1 and an average of 70 primary particles were chainly connected and the average length thereof was 700 nm. As shown in Table 4, the primary particles of the colloidal silica particles after 6 hours of heating at the end of heating in Comparative Example 11 were not spherical and had an average particle diameter of 12 nm and an average aspect ratio of 1.4 and an average of 4 primary particles were chainly connected and the average length thereof was 50 nm. This is presumed to be because dissolved calcium ions elute from the surface of the silica particles.

**TABLE 4**

| | State of colloidal silica particles during initial heating | | State of colloidal silica particles atend of heating | | | |
|---|---|---|---|---|---|---|
| | Average particle diamer of primary particles (nm) | Average aspect ratio of primary particles (majoraxis/minoraxis) | Average chain length(nm) | Average particle diameter of primary particles (nm) | Average aspect rartio of primary particles (majoraxis/minoraxis) | Average number of links of primary particles(links) |
| Example 1 | 4 | 10 | 700 | 10 | 1.1 | 70 |
| Example 2 | 4 | 10 | 35 | 7 | 1.1 | 5 |
| Example 3 | 3 | 10 | 1800 | 9 | 1.1 | 110 |
| Example 4 | 3 | 10 | 800 | 6 | 1.1 | 133 |
| Example 5 | 3 | 10 | 400 | 2) | 1.1 | 20 |
| Example 6 | 3 | 10 | 350 | 15 | 13 | 23 |
| Example 7 | 3 | 10 | 40 | 10 | 1.1 | 4 |
| Example 8 | 2 | 10 | 1800 | 6 | 1.1 | 300 |
| Example 9 | 2 | 10 | 100 | 6 | 1.1 | 16 |
| Example 10 | 5 | 1.1 | 600 | 10 | 1.1 | 60 |
| Example 11 | 4 | 10 | 600 | 10 | 1.1 | 60 |
| Example 12 | 4 | 10 | 100 | 12 | 1.1 | 8 |
| Example 13 | 4 | 10 | 1000 | 11 | 1.1 | 91 |
| Example 14 | 4 | 10 | 800 | 10 | 1.1 | 80 |
| Example 15 | 4 | 10 | 700 | 10 | 1.1 | 70 |
| Example 16 | 4 | 10 | 750 | 10 | 11 | 75 |
| Example 17 | 4 | 10 | 600 | 10 | 1.1 | 60 |
| Example 18 | 4 | 10 | 650 | 10 | 1.1 | 65 |
| Example 19 | 2 | 10 | 1000 | 12 | 1.1 | 83 |
| Example 20 | 2 | 10 | 1000 | 15 | 11 | 67 |
| Example 21 | 2 | 10 | 1500 | 10 | 1.1 | 150 |
| Comparative Example 1 | 5 | 10 | 250 | 30 | 1.1 | 9 |
| Comparative Example 2 | 5 | 10 | 400 | 30 | 1.1 | 14 |
| Comparative Example 3 | 2 | 10 | 2) | 10 | 11 | 2 |
| Comparative Example 4 | 3 | 10 | 2500 | 10 | 1.1 | 250 |
| Comparative Example 5 | 2 | 10 | 80 | 4 | 1.1 | 20 |
| Comparative Example 6 | 7 | 11 | 250 | 35 | 13 | 15 |
| Comparative Example 7 | 7 | 12 | 200 | 40 | 14 | 5 |
| Comparative Example 8 | 5 | 10 | 90 | 30 | 12 | 3 |
| Comparative Example 9 | 3 | 10 | 3200 | 8 | 11 | 400 |
| Comparative Example 10 | 10 | 10 | 4000 | 500 | 20 | 10 |
| Comparative Example 11 | 5 | 11 | 50 | 12 | 14 | 4 |
| Comparative Example 12 | 4 | 10 | 700 | 10 | 11 | 70 |

### (2) Content Ratio of Impurities in Colloidal Silica Particles

Using the ICP emission spectrometer/mass spectrometer and ammonia meter described above, the content ratio of impurities in the colloidal silica particles of the first precursor sols of Examples 1 to 21 and Comparative Examples 1 to 12 was measured. The results are shown in Table 5 below. Since the colloidal silica particles of Example 1 used KOH as an alkaline catalyst, the K concentration per colloidal silica particle was 850 ppm by mass. Na, NH₃, Ca, Mg, and Al were all less than 1 ppm by mass which was less than the detection limit. In Table 5, "<1" indicates that the content ratio of the impurities is less than 1 ppm by mass.

**TABLE 5**

| | Content ratio of impurities per colloidal silica particles (ppm by mass) | | | | | | Evaluation | | |
|---|---|---|---|---|---|---|---|---|---|
| | K | Na | NH₃ | Alkaline earth metals | | Al | Storage stability of surface-treated silica particle dispersion sol | Coating film | |
| | | | | Ca | Mg | | | Refractive index | Variation in refractive index (%) |
| Example 1 | 850 | <1 | <1 | <1 | <1 | <1 | Good | 1.10 | 1 |
| Example 2 | <1 | 700 | <1 | <1 | <1 | <1 | Good | 1.25 | 2 |
| Example 3 | <1 | 700 | <1 | <1 | <1 | <1 | Good | 1.17 | 1 |
| Example 4 | <1 | 700 | <1 | <1 | <1 | <1 | Good | 1.17 | 2 |
| Example 5 | <1 | 700 | <1 | <1 | <1 | <1 | Good | 1.25 | 1 |
| Example 6 | <1 | 700 | <1 | <1 | <1 | <1 | Good | 1.23 | 1 |
| Example 7 | <1 | 350 | <1 | <1 | <1 | <1 | Good | 1.24 | 2 |
| Example 8 | <1 | <1 | 990 | <1 | <1 | <1 | Good | 1.18 | 1 |
| Example 9 | <1 | 117 | <1 | <1 | <1 | <1 | Good | 1.22 | 2 |
| Example 10 | <1 | <1 | 2880 | <1 | <1 | <1 | Good | 1.22 | 1 |
| Example 11 | 850 | <1 | <1 | <1 | <1 | <1 | Good | 1.19 | 1 |
| Example 12 | 850 | <1 | <1 | <1 | <1 | <1 | Good | 1.25 | 2 |
| Example 13 | 850 | <1 | <1 | <1 | <1 | <1 | Good | 1.20 | 1 |
| Example 14 | 850 | <1 | <1 | <1 | <1 | <1 | Good | 1.20 | 1 |
| Example 15 | 850 | <1 | <1 | <1 | <1 | <1 | Good | 1.21 | 1 |
| Example 16 | 850 | <1 | <1 | <1 | <1 | <1 | Good | 1.21 | 1 |
| Example 17 | 850 | <1 | <1 | <1 | <1 | <1 | Good | 1.24 | 1 |
| Example 18 | 850 | <1 | <1 | <1 | <1 | <1 | Good | 1.22 | 1 |
| Example 19 | <1 | <1 | 542 | <1 | <1 | <1 | Good | 1.20 | 1 |
| Example 20 | <1 | <1 | 373 | <1 | <1 | <1 | Good | 1.21 | 1 |
| Example 21 | <1 | <1 | 285 | <1 | <1 | <1 | Good | 1.19 | 1 |
| Comparative Example 1 | <1 | <1 | <1 | <1 | 420 | <1 | Poor | - | - |
| Comparative Example 2 | <1 | <1 | 990 | <1 | <1 | 1000 | Poor | - | - |
| Comparative Example 3 | <1 | 12 | <1 | <1 | <1 | <1 | Good | 1.30 | 3 |
| Comparative Example 4 | <1 | 700 | <1 | <1 | <1 | <1 | Poor | - | - |
| Comparative Example 5 | <1 | 700 | <1 | <1 | <1 | <1 | Good | 1.30 | 2 |
| Comparative Example 6 | <1 | 700 | <1 | <1 | <1 | <1 | Good | 1.37 | 2 |
| Comparative Example 7 | <1 | 700 | <1 | <1 | <1 | <1 | Good | 1.38 | 2 |
| Comparative Example 8 | <1 | <1 | 490 | <1 | <1 | <1 | Good | 1.30 | 2 |
| Comparative Example 9 | <1 | 700 | <1 | <1 | <1 | <1 | Poor | - | - |
| Comparative Example 10 | <1 | 4020 | <1 | <1 | <1 | <1 | Poor | - | - |
| Comparative Example 11 | <1 | 5886 | <1 | 3843 | <1 | <1 | Poor | 1.20 | 5 |
| Comparative Example 12 | 850 | <1 | <1 | <1 | <1 | <1 | Poor | - | - |

### (3) Storage Stability of Surface-Treated Silica Particle Dispersion Sol

The storage stability of the surface-treated silica particle dispersion sols of Examples 1 to 21 and Comparative Examples 1 to 12 was confirmed visually by placing the dispersion sols in a transparent glass container and leaving the container to stand in an environment at 25°C and 60% relative humidity for one month. A case where no aggregates appear in the dispersion sol and the dispersion sol does not undergo gelation is judged as "good" and a case where aggregates appear in the dispersion sol or the dispersion sol undergoes gelation is judged as "poor". The results are shown in Table 5 above.

### (4) Refractive Index of Coating Film

The surface-treated silica particle dispersion sols of Examples 1 to 21 and Comparative Examples 1 to 12 were coated on a glass substrate by a spin coating method, such that the thickness after drying was 0.15 µm, and dried at a temperature of 120°C for 30 minutes. The refractive index of the coating film formed on the glass substrate was measured using the spectroscopic ellipsometer described above. The results are shown in Table 5 above. The variation in the refractive index of the film was calculated using Equation (1) by measuring the refractive index at three different locations on the film.

### [(Maximum Value-Minimum Value)/Average Value] x 100% (1)

A case of "less than ±5%" was judged as having a good variation in the refractive index of the film and a case of "±5% or more" was judged as having a poor variation in the refractive index of the film. In Table 5, "-" indicates that measurement was not possible.

### <Evaluation Results>

As is clear from Table 4, in Comparative Example 1, magnesium hydroxide (Mg(OH)₂) was used as the alkaline catalyst, thus, dissolved magnesium ions were eluted from the surface of the silica particles, causing the generation of coarse particles, such that the particles became coarse and the average particle diameter of the primary particles became excessively large at 30 nm. The average length of the chainlike shape of the colloidal silica particles was 250 nm and the average number of links was 9. For this reason, the coarse particles were aggregated and not dispersed and it was not possible to form a coating film on the glass substrate, making it impossible to measure the refractive index of the film. In addition, the content ratio of Mg (magnesium) impurities in the colloidal silica particles was 420 ppm by mass. The storage stability of the dispersion sol was "poor". It was not possible to perform the surface treatment and solvent substitution because the coarse particles were aggregated and not dispersed.

In Comparative Example 2, since a mixture of aluminum chloride hexahydrate and aqueous ammonia was used as the alkaline catalyst, aluminum ions, which are impurities, eluted from the surface of the silica particles and caused the generation of coarse particles, thereby making the colloidal silica particles coarse such that the average particle diameter of the primary particles was 30 nm, the average length of the chain of the colloidal silica particles was 400 nm, and the average number of links was 14. For this reason, the coarse particles were aggregated and not dispersed and it was not possible to form a coating film on the glass substrate, making it impossible to measure the refractive index of the film. In addition, the content ratio of NH₃ impurities in the colloidal silica particles was 990 ppm by mass and the content ratio of Al (aluminum) impurities was 1000 ppm by mass. The storage stability of the dispersion sol was "poor". It was not possible to perform surface treatment and solvent substitution because the coarse particles were aggregated and not dispersed.

In Comparative Example 3, the concentration of NaOH, which was the alkaline catalyst, was excessively low at 0.01% by mass, thus, the reactivity was poor, spherical primary particles were not sufficiently generated, the average length of the chain of the colloidal silica particles was excessively short at 20 nm, and the average number of links of the primary particles was 2, which was excessively small. For this reason, while it was possible to form a coating film, the refractive index of the film was high at 1.30. In addition, the content ratio of Na (sodium) impurities in the colloidal silica particles was 12 ppm by mass. The storage stability of the dispersion sol was "good".

In Comparative Example 4, the mixing ratio of tetraethoxysilane to the tetraethoxysilane solution was excessively high at 60.8% by mass and, as a result, the molar concentration ratio of pure water with respect to Si in tetraethoxysilane was 4.2, thus, the tetraethoxysilane solution underwent gelation. For this reason, although the average number of links of the primary particles was 250, the average length of the chain of the colloidal silica particles was excessively long at 2500 nm and it was not possible to form a coating film on the glass substrate, making it impossible to measure the refractive index of the film. In addition, the content ratio of Na (sodium) impurities in the colloidal silica particles was 700 ppm by mass. The storage stability of the dispersion sol was "poor". It was not possible to perform surface treatment and solvent substitution because the average length of the chain of the colloidal silica particles was excessively long and the colloidal silica particles were not dispersed.

In Comparative Example 5, the mixing ratio of tetraethoxysilane with respect to the tetraethoxysilane solution was excessively small at 8.7% by mass, and as a result, the ratio of pure water with respect to the Si in tetraethoxysilane was 64.0 molar concentration, thus, the spherical primary particles were not enlarged sufficiently in the heating step and the average particle diameter of the primary particles was excessively small at 4 nm. The average number of links of the primary particles was 20, the average length of the chain of the colloidal silica particles was 80 nm, and, while it was possible to form a coating film, since the spherical particles were aggregated, the refractive index of the film was high at 1.30. In addition, the content ratio of Na (sodium) impurities in the colloidal silica particles was 700 ppm by mass. The storage stability of the dispersion sol was "good" because although the spherical particles were aggregated, the average chain length was short.

In Comparative Example 6, the mixing ratio of tetraethoxysilane to the tetraethoxysilane solution was appropriate at 34.8% by mass, but the ratio of pure water to Si in the tetraethoxysilane was excessively small at 1.6 molar concentration. For this reason, the primary particles became coarse and the average particle diameter of the primary particles was excessively large at 35 nm. The average number of links of the primary particles was 15, the average length of the chain of the colloidal silica particles was 250 nm, and, while it was possible to form a coating film, since the particles were coarse and spherical, the refractive index of the film was high at 1.37. In addition, the content ratio of Na (sodium) impurities in the colloidal silica particles was 700 ppm by mass. The storage stability of the dispersion sol was "good".

In Comparative Example 7, the mixing ratio of tetraethoxysilane with respect to the tetraethoxysilane solution was appropriate at 34.8% by mass, but the ratio of pure water to Si in tetraethoxysilane was excessively small at 1.6 molar concentration. For this reason, the primary particles became coarse, the average particle diameter of the primary particles became excessively large at 40 nm, and the average aspect ratio of the primary particles became excessively large at 1.4. The average number of links of the primary particles was 5, the average chain length of colloidal silica particles was 200 nm, and, while it was possible to form a coating film, since the spherical particles were aggregated, the refractive index of the film was high at 1.38. In addition, the content ratio of Na (sodium) impurities in the colloidal silica particles was 700 ppm by mass. The storage stability of the dispersion sol was "good".

In Comparative Example 8, the concentration of NH₃ (ammonia), which was an alkaline catalyst, was excessively high at 0.60% by mass, thus, the reaction rate for the hydrolysis of tetraethoxysilane increased significantly, the spherical primary particles became coarse, and the average particle diameter of the primary particles was excessively large at 30 nm. The average aspect ratio of the primary particles was 1.2. The average length of the chain of the colloidal silica particles was 90 nm and the average number of links of the primary particles was only 3 aggregated particles. For this reason, while it was possible to form a coating film, the refractive index of the film was high at 1.30. In addition, the content ratio of NH₃ impurities in the colloidal silica particles was 490 ppm by mass. The storage stability of the dispersion sol was "good".

In Comparative Example 9, the mixing ratio of tetraethoxysilane with respect to the tetraethoxysilane solution was excessively high at 69.5% by mass, and as a result, the ratio of pure water to Si in tetraethoxysilane was 2.9 molar concentration, thus, the tetraethoxysilane solution underwent gelation. The average number of links of the primary particles was extremely large at 400 and the average length of the chain of the colloidal silica particles was 3200 nm, which was excessively long. For this reason, it was not possible to form a coating film on the glass substrate, making it impossible to measure the refractive index of the film. In addition, the content ratio of Na (sodium) impurities in the colloidal silica particles was 700 ppm by mass. The storage stability of the dispersion sol was "poor". It was not possible to perform surface treatment and solvent substitution because the average length of the chain of the colloidal silica particles was excessively long and the colloidal silica particles were not dispersed.

In Comparative Example 10, the concentration of NaOH, which was an alkaline catalyst, was excessively high at 0.70% by mass, thus, the reaction rate for the hydrolysis of tetraethoxysilane increased significantly, therefore, the primary particles became coarse and the average particle diameter of the primary particles was excessively large at 500 nm. The average length of the chain of the colloidal silica particles was 4000 nm and aggregated particles were obtained in which the average number of links of the primary particles was 10. The average aspect ratio of the primary particles was excessively large at 2.0. Since the coarse spherical particles were aggregated, it was not possible to form a coating film on the glass substrate, making it impossible to measure the refractive index of the film. In addition, the content ratio of Na (sodium) impurities in the colloidal silica particles was 4020 ppm by mass. The storage stability of the dispersion sol was "poor". It was not possible to perform surface treatment and solvent substitution because the coarse spherical particles were aggregated.

In Comparative Example 11, a sodium silicate (Na silicate) aqueous solution was used instead of the alkyl silicate and a calcium chloride aqueous solution was added to the sodium silicate aqueous solution, thus, during particle synthesis, for the impurities, the concentration of Na (sodium) was 9691 ppm by mass and the concentration of Ca (calcium) was 4052 ppm by mass. In addition, due to thickening, for the impurities, the concentration of Na increased to 5886 ppm by mass and the concentration of Ca increased to 3843 ppm by mass. However, as time elapsed, these impurities, the sodium ions and the calcium ions, were eluted from the surface of the silica particles and needle-shaped impurities were precipitated, such that particles with an extremely large average aspect ratio of 1.4 were observed. In addition, the storage stability of the sol was "poor". Since the dispersion sol did not undergo gelation or increase in viscosity, it was possible to form a coating film and the refractive index of the film was 1.20; however, the thickness of the chains was not uniform and there were variations in the number of links of the particles, thus, the variation in the refractive index of the film was extremely large at 5%.

In Comparative Example 12, N-2-(aminoethyl)-3-aminopropylmethyldimethoxysilane (manufactured by Shin-Etsu Chemical Co., Ltd., product name: KBM-602) having a functional group of an amino group, which is not described in the first aspect of the present invention, was used as a surface treatment agent, thus, the pH in the liquid changed due to the amino groups and the silica particles in the dispersion sol were aggregated. For this reason, it was not possible to form a coating film on the glass substrate, making it impossible to measure the refractive index of the film.

On the other hand, in Examples 1 to 21, the surface-treated silica particle dispersion sol was produced under conditions that satisfied the production conditions of the second aspect of the present invention described above, thus, it was possible to obtain a surface-treated silica particle dispersion sol having the characteristics of the first aspect of the present invention.

### INDUSTRIAL APPLICABILITY

The surface-treated silica particle dispersion sol of the present invention is used in the field of forming antireflection films used to prevent reflection of incident light in display panels such as cathode ray tubes, liquid crystals, and organic EL, solar cells, glass for showcases, and the like, or in the field of forming interlayer films or the like that utilize a difference in refractive index used in sensors, camera modules, and the like.

### REFERENCE SIGNS LIST

11: Mixed solvent of pure water and organic solvent
12: Alkyl silicate
13: Alkyl silicate solution
14: Alkaline catalyst
15: Raw material liquid
16: First precursor sol
17: Alcohol
18: Alcohol-diluted sol
19: Surface treatment agent
20: Second precursor sol
21: Hydrophobic solvent
22: Surface-treated silica particle dispersion sol

## Claims

1. A surface-treated silica particle dispersion sol formed by dispersing a group of colloidal silica particles in a hydrophobic solvent, the colloidal silica particles being composed of an average number of 4 to 300 spherical primary particles, as observed with a field emission-type scanning electron microscope, chainly connected to have an average length of 35 nm to 1,800 nm, and the surfaces of the particles being coated with a silane coupling agent having a functional group which is a vinyl group, a methyl group, an epoxy group, a styryl group, or a methacrylic group, or coated with a titanate-based coupling agent or an aluminate-based coupling agent,
wherein an average particle diameter of the spherical primary particles is 6 nm to 20 nm,
an average aspect ratio of the spherical primary particles is in a range of 1.0 to 1.3,
a content ratio of each of impurities of K, Na, or NH₃ per the colloidal silica particle is 3,500 ppm by mass or less, and
a content ratio of each of impurities of an alkaline earth metal or aluminum is less than 1 ppm by mass.

2. A method for producing the surface-treated silica particle dispersion sol according to Claim 1, the method comprising:
(a) a step of obtaining an alkyl silicate solution by mixing an alkyl silicate having an alkyl group having 1 to 2 carbon atoms in a mixed solvent of pure water and an organic solvent that is an alcohol having 1 to 4 carbon atoms or a water-soluble glycol compound having 2 to 4 carbon atoms;
(b) a step of obtaining a raw material liquid by adding and mixing an alkaline catalyst, which is an alkali metal hydroxide, ammonia, or an alkylamine, in the alkyl silicate solution;
(c) a step of obtaining a first precursor sol in which colloidal silica particles are dispersed by heating the raw material liquid at 40°C to 100°C for 24 hours to 100 hours;
(d) a step of obtaining an alcohol-diluted sol by adding and mixing an alcohol having 1 to 4 carbon atoms in the first precursor sol;
(e) a step of obtaining a second precursor sol in which surface-treated silica particles are dispersed by adding and mixing, in the alcohol-diluted sol, a surface treatment agent that is a silane coupling agent having a functional group which is a vinyl group, a methyl group, an epoxy group, a styryl group, or a methacrylic group, or a surface treatment agent that is a titanate-based coupling agent or an aluminate-based coupling agent, in a ratio of 10% by mass to 100% by mass, when the silica particles in the alcohol-diluted sol are set to 100% by mass, and carrying out heating at 40°C to 100°C for 3 hours to 24 hours; and
(f) a step of substituting the solvent by adding and mixing a hydrophobic solvent in the second precursor sol such that a silica concentration in the second precursor sol is set to 1% by mass to 25% by mass, and carrying out heating at 40°C to 80°C for 3 hours to 12 hours,
wherein the pure water is included in a ratio of 8 molar concentration to 23 molar concentration with respect to Si in the alkyl silicate,
the alkyl silicate is mixed at a ratio of 18% by mass to 44% by mass when the alkyl silicate solution is set to 100% by mass in the step (a), and
the alkaline catalyst is mixed at a ratio of 0.02% by mass to 0.40% by mass with respect to silica when converting the alkyl silicate into the silica in the step (b).

3. The method for producing the surface-treated silica particle dispersion sol according to Claim 2,
wherein spherical primary particles having an average aspect ratio of 1.0 to 1.1 and an average particle diameter of less than 5 nm are formed in an initial heating stage of the step (c) and, when the heating ends, the spherical primary particles in the initial heating stage have an average particle diameter of 6 nm to 20 nm and are linked in a chainlike shape having an average number of 4 to 300 particles to form a group of colloidal silica particles having an average length of 35 nm to 1,800 nm.

4. A film obtained using the surface-treated silica particle dispersion sol according to Claim 1,
wherein the film has a refractive index of 1.10 to 1.25.
